# EUROPÄISCHE PATENTSCHRIFT

(11) **EP 3 145 977 B1**
(45) Veröffentlichungstag und Bekanntmachung des Hinweises auf die Patenterteilung: **11.04.2018**
(21) Anmeldenummer: 15719211.3
(22) Anmeldetag: 28.04.2015
(51) Int. Cl.: C08G 65/26, B01J 27/26, C08G 77/46

(54) **ETHOXYLATHERSTELLUNG UNTER VERWENDUNG HOCH AKTIVER DOPPELMETALLCYANID-KATALYSATOREN**
ETHOXYLATE PRODUCTION USING HIGHLY ACTIVE DOUBLE METAL CYANIDE CATALYSTS
FABRICATION D'ÉTHOXYLATES À L'AIDE DE CATALYSEURS À BASE DE CYANURE BIMÉTALLIQUE SUPERACTIFS

(30) Priorität: 19.05.2014 DE 102014209408
(43) Veröffentlichungstag der Anmeldung: 29.03.2017
(73) Patentinhaber: Evonik Degussa GmbH, 45128 Essen (DE)
(72) Erfinder: FIEDEL, Olga, 45131 Essen (DE); SCHUBERT, Frank, 47506 Neukirchen-Vluyn (DE); FIEDEL, Michael, 45131 Essen (DE); KNOTT, Wilfried, 45355 Essen (DE)
(86) Internationale Anmeldenummer: PCT/EP2015/059124
(87) Internationale Veröffentlichungsnummer: WO 2015/176921

(56) Entgegenhaltungen:
- EP-A1- 0 485 637
- WO-A1-01/90219
- WO-A1-99/64152
- US-A1- 2010 105 843
- US-A1- 2010 168 367
- US-B1- 6 362 126

## Beschreibung

### Gegenstand der Erfindung:

Die Erfindung betrifft Polyether herstellbar in Gegenwart eines DMC-Katalysators enthaltend Polyethersiloxane, Verfahren zur Herstellung der Polyether und deren Verwendung, wie in den vorliegenden Ansprüchen beschrieben.

### Stand der Technik:

In der Literatur sind zahlreiche Verfahren zur Herstellung von Polyethern, sowohl als reine Polyether als auch mit weiteren Copolymere bekannt. Neben der basischen Katalyse hat sich insbesondere auch die DMC-Katalyse zum Einsatz bei der Alkoxylierung etabliert. Die Vorteile der DMC-Katalyse sind unter anderem, dass Aufarbeitungsschritte eingespart werden können, und die Produkte besondere Eigenschaften, wie beispielsweise eine geringe Polydispersität aufweisen.
Die Herstellung und Verwendung von Doppelmetallcyanid-Komplexen als Alkoxylierungskatalysatoren ist seit den 1960er Jahren bekannt und wird zum Beispiel in US 3,427,256, US 3,427,334, US 3,427,335, US 3,278,457, US 3,278,458, US 3,278,459 dargestellt. Unter den in den Folgejahren weiter entwickelten und z.B. in US 5,470,813 und US 5,482,908 beschriebenen, immer wirksameren Typen von DMC-Katalysatoren befinden sich im speziellen Zink-Cobalt-Hexacyanokomplexe. Dank ihrer guten Aktivität werden zur Herstellung von Polyethern nur geringe Katalysatorkonzentrationen benötigt.

Weit verbreitet sind Polyether, die ausgehend von einem OH-funktionellen Starter hergestellt werden. Die daraus gewonnenen Polyether weisen ihrerseits terminale OH-Gruppen auf. So entstehen z.B. bei Verwendung von Butanol, Hexandiol oder Glycerin Polyether mit einer, mit zwei oder mit drei kettenendständigen Hydroxylgruppen. Die OH-Funktionalität des Polyethers, die sich so zwangsläufig aus der Anzahl der OH-Gruppen des Starters ergibt, ist ein wichtiges Eigenschaftsmerkmal, das die Anwendungsmöglichkeiten jedes Polyethers bestimmt. Polyether, die in der Polyurethansynthese mit Isocyanaten vernetzt werden sollen, weisen üblicherweise zwei, drei oder mehr terminale OH-Funktionen auf. Die OH-Funktionalität bestimmt die Vernetzungsdichte und damit entscheidend die Materialeigenschaften im vernetzten Endmaterial. Besonders aktiv sind primäre, terminale OH-Gruppen, die beispielsweise dann entstehen, wenn das Monomer, welches terminal an das Polymer polymerisiert wird, ein Ethylenoxid ist. Eine der Herausforderungen, der DMC Katalyse ist, dass die klassischen DMC Katalysatoren empfindlich auf kleine Startalkohole oder auch kleine Epoxide, wie beispielsweise Ethylenoxid reagieren. Solche Substanzen können als eine Art Katalysatorgift wirken, wodurch die Aktivität des Katalysators deutlich herabgesetzt wird oder dieser nicht zuletzt vollständig deaktiviert wird.

Modifikationen von DMC Katalysatoren sind in den vergangenen Jahren zahlreich erforscht worden. Dabei kamen immer wieder oberflächenaktive Substanzen bei der Herstellung der Katalysatoren zum Einsatz. Die WO 2004/000913 A1, WO 2000/74843 A1 und die WO 2000/74845 A1 offenbaren beispielsweise Verfahren zur Herstellung von Multimetallcyanid-Verbindungen unter Einsatz von Fettalkoholalkoxylaten oder Blockpolyethern bestehend aus Polyoxyethylen- und Polyoxypropylen-Blöcken, erhältlich unter den Markennamen Plurafac® oder Pluronic® (Produkte der Firma BASF SE), und deren Verwendung zur Herstellung von Polyetherpolyolen. Auffällig ist, dass die konkreten Beispiele zur Herstellung von Polyethern mit den beschriebenen DMC-Katalysatoren ausschließlich den Reaktionsstart mit Propylenoxid zeigen.
EP1256596 A1 offenbart Verfahren zur Herstellung von DMC-Katalysatoren, die mindestens eine oberflächenaktive Substanz enthalten. Gleichermaßen befassen sich die WO 00/47650 A1 und die EP1165658 A1 mit DMC-Katalysatoren, die mindestens eine oberflächenaktive Substanz enthalten. Auch in diesen Fällen wird anhand der erhaltenen DMC-Katalysatoren ausschließlich die Umsetzung von Propylenoxid gezeigt.

DMC-Katalysatoren werden bekanntermaßen neben weiteren Reaktionen insbesondere zur Alkoxylierung von Epoxiden eingesetzt. Dabei werden immer wieder die bekannten Epoxide Ethylenoxid, Propylenoxid und Butylenoxid und weitere angeführt. Während der Start der Reaktion wie allgemein bekannt mit Propylenoxid und anderen Epoxiden höherer Molmassen problemlos durchführbar ist, gibt es jedoch nur wenige experimentelle Beispiele, in welchen eine DMC-katalysierte Alkoxylierung mit reinem Ethylenoxid gestartet wird, oder reine Ethylenoxid basierte Polyether mittels DMC Katalyse hergestellt werden. Auch die Beispiele der vorab beschriebenen Dokumente zeigen den Start des DMC-Katalysators mit Propylenoxid. Dies liegt daran, dass Ethylenoxide an der überwiegenden Anzahl der literaturbekannten DMC-Katalysatoren als Katalysatorgift wirken, das heißt, den Katalysator blockieren, und damit die Aktivität des Katalysators drastisch abfällt bzw. ganz zum Erliegen kommt. Daher ist es in der Praxis üblich, die Katalysatoren zunächst mit einem gut verträglichen Epoxid, beispielsweise Propylenoxid zu starten und erst im weiteren Reaktionsverlauf Ethylenoxid zuzugeben.

Mittlerweile sind dem Fachmann einige modifizierte DMC-Katalysatoren bekannt, die auch beim Start mit Ethylenoxid ihre Aktivität zumindest teilweise aufrechterhalten. Die mit diesen modifizierten DMC-Katalysatoren hergestellten Alkoxylierungsprodukte, insbesondere Polyether, weisen allerdings häufig schlechte physikalische Eigenschaften auf. Bei der Lagerung von Ethylenoxid reichen Polyethern, die mittels DMC Katalyse hergestellt wurden, kommt es im Produkt aufgrund unterschiedlicher EO-Gehalte in den Polyetherketten häufig zu Phasentrennungen. Diese Inhomogenität der Ethoxylate hat zur Folge, dass die Produkte nur eingeschränkt eingesetzt werden können.
Es herrscht daher nach wie vor Bedarf an Alkoxylierungsprodukten, die bei einem hohen Anteil kleinerer Reaktanden, wie beispielsweise Ethylenoxid, homogen sind und auch nach mehreren Wochen Lagerzeit keine Phasentrennung aufweisen. Gleichzeitig aber die positiven Eigenschaften der DMC katalysierten Alkoxylierungsprodukte wie beispielsweise geringe Polydisperstät aufweisen.

Aufgabe der vorliegenden Erfindung war es daher, Alkoxylierungsprodukte bereit zu stellen, welche einen hohen Anteil kleinerer Reaktanden, wie beispielsweise Ethylenoxid, aufweisen und gleichzeitig homogen sind und auch nach mehreren Wochen Lagerzeit keine Phasentrennung aufweisen, jedoch unter der Bedingung, dass die positiven Eigenschaften der DMC katalysierten Alkoxylierungsprodukte wie beispielsweise geringe Polydisperstät erhalten bleiben. Weitere Aufgabe der Erfindung war es, das Spektrum an bislang über DMC-Katalyse herstellbaren Alkoxylierungsprodukten deutlich zu erweitern.

### Detaillierte Beschreibung:

Die vorgenannte Aufgabe konnte überraschend gelöst werden, indem als Katalysatoren bei der Alkoxylierung DMC-Katalysatoren, enthaltend Polyethersiloxane eingesetzt werden.

Die erfindungsgemäßen Alkoxylierungsprodukte, das Verfahren zu deren Herstellung sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte angegeben, so handelt es sich, wenn nicht anders angegeben, um das Zahlenmittel. Werden nachfolgend Stoffeigenschaften, wie z. B. Viskositäten oder ähnliches angegeben, so handelt es sich, wenn nicht anders angegeben, um die Stoffeigenschaften gemessen bei 25 °C.
Gegenstand der vorliegenden Erfindung sind daher Alkoxylierungsprodukte erhältlich durch Umsetzung mindestens eines Epoxids (A) in Gegenwart mindestens eines DMC-Katalysators (B), enthaltend
a) ein oder mehrere Doppelmetallcyanid-Verbindungen und
b) ein oder mehrere Polyethersiloxane und
c) optional einen oder mehrere von b) verschiedenen organischen Komplexliganden,
wobei der DMC Katalysator (B) durch Umsetzung von wasserlöslichen Metallsalzen mit wasserlöslichen Metallcyanidsalzen zu Doppelmetallcyanid-Verbindungen der Komponente a) in Anwesenheit mindestens eines Polyethersiloxans der Komponente b) erhalten wird. Ein weiterer Gegenstand der vorliegenden Erfindung ist ein Verfahren zur Herstellung Alkoxylierungsprodukten durch Umsetzung mindestens eines Epoxids (A) in Gegenwart mindestens eines DMC-Katalysators (B), enthaltend
a) ein oder mehrere Doppelmetallcyanid-Verbindungen und
b) ein oder mehrere Polyethersiloxane und
c) optional einen oder mehrere von b) verschiedenen organischen Komplexliganden, der DMC Katalysator (B) durch Umsetzung von wasserlöslichen Metallsalzen mit wasserlöslichen Metallcyanidsalzen zu Doppelmetallcyanid-Verbindungen der Komponente a) in Anwesenheit mindestens eines Polyethersiloxans der Komponente b) erhalten wird. Erfindungsgemäße Katalysatoren (B) entsprechen bevorzugt den nachstehend beschriebenen Ausführungsformen.

Bei Komponente a) handelt es sich um Doppelmetallcyanid-Verbindungen, die Reaktionsprodukte wasserlöslicher Metallsalze der Komponente a1) und wasserlöslicher Metallcyanidsalze der Komponente a2) sind.
Zur Herstellung der Doppelmetallcyanid-Verbindungen geeignete wasserlösliche Metallsalze der Komponente a1) besitzen bevorzugt die allgemeine Formel (I)

M(X)ₙ Formel (I),

wobei M ausgewählt wird aus den Metallen Zn (II), Fe (II), Ni (II), Mn (II), Co (II), Sn (II), Pb (II), Fe (III), Mo (IV), Mo(VI), Al (III), V (V), V (IV), Sr (II), W (IV), W (VI), Cu (II) und Cr (III). Besonders bevorzugt sind Zn (II), Fe (II), Co (II) und Ni (II). X sind gleiche oder verschiedene, vorzugsweise gleiche Anionen, bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3. Beispiele geeigneter wasserlöslicher Metallsalze sind Zinkchlorid, Zinkbromid, Zinkacetat, Zinkacetylacetonat, Zinkbenzoat, Zinknitrat, Eisen(II)sulfat, Eisen(II)bromid, Eisen(II)chlorid, Cobalt(II)chlorid, Cobalt(II)thiocyanat, Nickel(II)chlorid und Nickel(II)nitrat. Es können auch Mischungen verschiedener wasserlöslicher Metallsalze eingesetzt werden.
Zur Herstellung der Doppelmetallcyanid-Verbindungen geeignete wasserlösliche Metallcyanidsalze der Komponente a2) besitzen bevorzugt die allgemeine Formel (II)

(Y)ₐM'(CN)_{b}(A)_{c} (II)

wobei M' ausgewählt wird aus den Metallen Fe(II), Fe(III), Co(II), Co(III), Cr(II), Cr(III), Mn(II), Mn(III), Ir(III), Ni(II), Rh (III), Ru(II), V(IV) und V(V). Besonders bevorzugt wird M' ausgewählt aus den Metallen Co(II), Co(III), Fe(II), Fe(III), Cr(III), Ir(III) und Ni(II). Das wasserlösliche Metallcyanidsalz kann eines oder mehrere dieser Metalle enthalten. Y sind gleiche oder verschiedene, vorzugsweise gleiche Alkalimetallkationen oder Erdalkalimetallkationen. A sind gleiche oder verschiedene, vorzugsweise gleiche Anionen, ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Sowohl a, als auch b und c sind ganzzahlig, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert o.
Beispiele geeigneter wasserlöslicher Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III). Bevorzugte Doppelmetallcyanid-Verbindungen der Komponente a) sind Verbindungen der allgemeinen Formel (III)

Mₓ[M'_{x'}(CN)_{y}]_{z} (III)

worin M wie in Formel (I) und M' wie in Formel (II) definiert ist, und x, x', y und z ganzzahlig und so gewählt sind, dass die Elektroneutralität der Doppelmetallcyanidverbindung gegeben ist. Vorzugsweise ist x 3, x' 1, Y 6 und z 2, M Zn(II), Fe(II), Co(II) oder Ni(II) und M' Co(III), Fe(III), Cr(III) oder Ir(III).
Beispiele geeigneter Doppelmetallcyanidverbindungen der Komponente a) sind Zinkhexacyanocobaltat(III), Zinkhexacyanoiridat (III), Zinkhexacyanoferrat(III) und Cobalt(II)hexacyanocobaltat(III). Weitere Beispiele geeigneter Doppelmetallcyanid Verbindungen sind z.B. US-A 5 158922 zu entnehmen. Besonders bevorzugt verwendet wird Zinkhexacyanocobaltat (III).

Als Polyethersiloxan der Komponente b) kann prinzipiell jedes Polyethersiloxan verwendet werden. Polyethersiloxane im Sinne dieser Erfindung sind alle Verbindungen, die sowohl einen Siloxan-Anteil als auch einen Polyether-Anteil enthalten. Wie sich herausgestellt hat, sind die erfindungsgemäßen Alkoxylierungsprodukte, welche unter Verwendung von DMC-Katalysatoren (B) enthaltend ein Polyethersiloxan der Komponente b) hergestellt wurden, homogen und äußerst Lagerstabil, auch wenn es sich um reine Ethylenoxid-Polyether handelt oder um Polyether, welche mit reinem Ethylenoxid gestartet wurden. Es hat sich gezeigt, dass insbesondere solche erfindungsgemäßen DMC-Katalysatoren (B) besonders stabile Alkoxylierungsprodukte erzeugen, bei denen die berechnete mittlere Molmasse des Polyethersiloxans von 300 bis 50.000 g/Mol, bevorzugt von 500 bis 30.000 g/Mol, besonders bevorzugt von 600 bis 10.000 g/Mol beträgt und/oder, bevorzugt und, das Polyethersiloxan ein Gewichtsverhältnis von Siloxan-Anteil zu Polyether-Anteil von 1 zu 1 bis 1 zu 10, bevorzugt 1 zu 1,2 bis 1 zu 8, besonders bevorzugt von 1 zu 1,5 bis 1 zu 5, und insbesondere bevorzugt von 1 zu 1,8 bis 1 zu 3, bezogen auf die berechnete mittlere Molmasse des Polyethersiloxans aufweist. In anderen Worten beträgt der Quotient der gebildet wird aus der berechneten mittleren Molmasse von Siloxan-Anteil geteilt durch berechnete mittlere Molmasse von Polyether-Anteil von 0,1 bis 1 bevorzugt von 0,2 bis 0,9, besonders bevorzugt von 0,4 bis 0,6.
Die berechnete mittlere Molmasse wird im Sinne dieser Erfindung wie folgt bestimmt: Von dem eingesetzten Polyethersiloxan wird sowohl ein ²⁹Si-NMR als auch ein ¹H-NMR gemessen. Aus dem ²⁹Si-NMR ergeben sich die Anteile an M, D, T und Q Einheiten. Aus dem ²⁹Si-NMR ergibt sich ebenso, ob und welche Anzahl an M und D Einheiten am Siloxan mit Polyether oder anderen Gruppen substituiert sind. Aus den so erhaltenen Angaben wird die Molmasse des Siloxan-Anteils berechnet. Analog werden aus dem ¹H-NMR die Anteile der unterschiedlichen Alkylenoxide im Polyether-Anteil bestimmt und die Anteile der Starter. Aus den so erhaltenen Angaben wird die Molmasse des Polyether-Anteils berechnet. Aus beiden Anteilen ergibt sich die berechnete mittlere Molmasse des Polyethersiloxans. ²⁹Si-NMR und ¹H-NMR werden in CDCl₃ als Lösungsmittel gemessen. Alternativ, insbesondere für den Fall, dass einzelne Polyethersiloxane zu komplex sein sollten, um ihre mittlere Molmasse durch die oben beschriebene Methode zu berechnen, kann auch vor der Herstellung des Polyethersiloxans der Polyether vor der Reaktion mit dem Siloxan mit ¹H-NMR bestimmt und seine mittlere Molmasse berechnet werden und das Siloxan vor der Reaktion mit dem Polyether mit ²⁹Si-NMR bestimmt und seine mittlere Molmasse berechnet werden. Aus den berechneten mittleren Molmassen der beiden Ausgangsstoffe Polyether und Siloxan kann der Fachmann die mittlere Molmasse des Produktes Polyethersiloxan berechnen.
Zur Berechnung des Gewichtsverhältnisses werden dabei alle Polyether-Reste bis zur Bindungsstelle an das Si-Atom (R² in Formel IV) vollständig dem Polyether-Anteil zugerechnet und das Siloxangerüst mit allen weiteren Substituenten dem Siloxan-Anteil zugerechnet. Polyethersiloxane mit den beschriebenen Gewichtsverhältnissen zwischen Polyether-Anteil und Siloxan-Anteil führen zu ganz besonders hervorragenden DMC Katalysatoren (B), die zu besonders homogenen und lagerstabilen Alkoxylierungsprodukten führen, im Vergleich zu den im Stand der Technik bekannten modifizierten oder mit anderen als der hier definierten Komponente b) modifizierten DMC Katalysatoren. Es kann auch besonders vorteilhaft sein, wenn neben dem Polyethersiloxan ein Anteil, bevorzugt größer 0 bis 2 Mol Äquivalente, bezogen auf das Polyethersiloxan, an reinem Polyether anwesend ist, der in seinem Aufbau dem Polyether-Anteil des Polyethersiloxans im Wesentlichen entspricht.
Besonders bevorzugt sind Polyethersiloxane der Komponente b) welche Polydialkylsiloxane, insbesondere Polydimethylsiloxane, umfassen, die 1 bis 100, bevorzugt 1 bis 60 D-Siloxaneinheiten aufweisen und bei denen an einer Position die Alkylgruppe, insbesondere die Methylgruppe, durch einen Polyether mit 2 bis 50, bevorzugt 3 bis 20 Alkylenoxid-Einheiten, bevorzugt Ethylenoxid-Einheiten ausgetauscht ist. Zudem ist bevorzugt, wenn der Polyether am freien Ende (also nicht dem Ende, an dem die Bindung an das Siloxan erfolgt ist) eine OH-Gruppe trägt.
Bevorzugte Polyethersiloxane der Komponente b) entsprechen der Formel (IV)

M_{d} M'_{d1} Dₑ D'ₑ₁ D"ₑ₂ T_{f} Q_{g} (Formel IV)

wobei
- M: = (R¹₃ Si O_{1/2})
- M': = (R²R¹₂ Si O_{1/2})
- D: = (R¹₂ Si O_{2/2})
- D': = (R²R¹ Si O_{2/2})
- D": = (R⁴R¹ Si O_{2/2})
- T: = (R³ Si O_{3/2})
- Q: = (Si O_{4/2})
- d: = 0 bis 20; bevorzugt 1 bis 10, besonders bevorzugt 1 bis 5 und insbesondere bevorzugt 2;
- d1: = 0 bis 20; bevorzugt 1 bis 10, besonders bevorzugt 0 bis 2; insbesondere bevorzugt 0;
wobei die Summe aus d und d1 bevorzugt 2 ergibt;
- e: = 0 bis 300; bevorzugt 1 bis 100, besonders bevorzugt 2 bis 40, insbesondere bevorzugt 0 bis 20;
- e1: = 0 bis 25; bevorzugt 0,1 bis 15, besonders bevorzugt 1 bis 10, insbesondere bevorzugt 1 bis 5;
- e2: = 0 bis 10; bevorzugt 1 bis 5, insbesondere bevorzugt 0;
- f: = 0 bis 10; bevorzugt 1 bis 5, insbesondere bevorzugt 0;
- g: = 0 bis 10; bevorzugt 1 bis 5, insbesondere bevorzugt 0;
mit der Maßgabe, dass
die Summe aus d1 und e1 größer 0, bevorzugt größer gleich 1 ist;
- R¹: unabhängig voneinander Wasserstoff oder gleiche oder verschiedene lineare oder verzweigte Kohlenwasserstoffreste mit 1 bis 30 Kohlenstoffatomen oder auch aromatische Kohlenwasserstoffreste mit 6 bis 30 Kohlenstoffatomen bevorzugt Methyl oder Phenyl, insbesondere Methyl;
- R²: unabhängig voneinander gleiche oder verschiedene Polyether, wobei die Polyether Seitenketten aufweisen können, die gegebenenfalls auch mit weiteren Heteroatomen substituiert sein können, bevorzugt wird R² ausgewählt aus der Gruppe aus

-(O)ₕ-CH₂-CH₂-CH₂-O-(CH₂-CH₂O-)ⱼ-(CH₂-CH(R')O-)ₖ-(CH(R')-CH₂O-)_{k'}-R" (Formel V) und

-(O)ₕ-CH₂-CH₂-O-(CH₂-CH₂O-)ⱼ-(CH₂-CH(R')O-)ₖ-(CH(R')-CH₂O-)_{k'}-R" (Formel VI)

-(O)ₕ-(CH₂-CH₂O-)ⱼ-(CH₂-CH(R')O-)ₖ-(CH(R')-CH₂O-)_{k'}-R" (Formel VII)

worin
h 0 oder 1, bevorzugt 0
j 0 bis 100, vorzugsweise größer 0 bis 50, besonders bevorzugt 2 bis 20 insbesondere 3 bis 10,
k+ k' = 0 bis 100, vorzugsweise größer 0 bis 50, insbesondere 2 bis 20, insbesondere 0
mit der Maßgabe, dass die Summe aus j, k und k' mindestens 3 ergibt und die Einheiten mit den Indices j, k und k' in zueinander beliebiger Abfolge, also blockweise oder statistisch verteilt, in dem Rest R² angeordnet sind,
R' unabhängig von einander eine gegebenenfalls substituierte, beispielsweise mit Alkylresten, Arylresten oder Halogenalkyl- oder Halogenarylresten substituierte, Alkyl- oder Arylgruppe mit 1 bis 12 C-Atomen, bevorzugt Ethyl oder Methyl, insbesondere Methyl, und
R" unabhängig voneinander ein Wasserstoffrest oder eine Alkyl- oder Alkylengruppe mit 1 bis 4 C-Atomen, eine Gruppe -C(O)-R'" mit R'" = Alkylrest, eine Gruppe -CH₂C(O)-CH₂C(O)-R', eine Alkylarylgruppe, wie z. B. eine Benzylgruppe, die Gruppe -C(O)NH-R' bedeutet, bevorzugt ist R" ein Wasserstoffrest,
- R³: unabhängig voneinander gleiche oder verschiedene Reste R¹ oder R², bevorzugt R¹, besonders bevorzugt Methyl oder Phenyl, insbesondere Methyl;
- R⁴: unabhängig voneinander gleiche oder verschiedene organische Reste mit mehr als 3 Kohlenstoffatomen, bevorzugt mit 4 bis 30, besonders bevorzugt mit 4 bis 20 Kohlenstoffatomen, mit der Maßgabe, dass R⁴ verschieden von R² ist, bevorzugt ist R⁴ ausgewählt aus -CH₂(CH₂)ₙCH₂-O-CH₂(CHOCH₂), wobei (CHOCH₂) einen Epoxidring darstellt, -CH₂(CH₂)ₙC(O)O-CH₃, -CH₂(CH₂)ₙCH₂OH, -CH₂(CH₂)ₙCH₂-O-CH₂CH(OH)CH₂CH₂(OH) mit n = 0 bis 20, bevorzugt 1 bis 10.
Die Polyether können sowohl über eine Si-O-C als auch über eine Si-C Bindung an das Siloxangerüst gebunden sein. Bevorzugt ist im Sinne dieser Erfindung ist die Si-C Verbindung wie sie beispielsweise als Produkt der Hydrosilylierung erhalten wird. In Formel (IV) stellt der Rest R² mit h = 1 eine Si-O-C Bindung dar und das bevorzugte h = 0 eine Si-C Bindung. Ganz besonders hervorragend eignen sich erfindungsgemäß Polyethersiloxane der Komponente b) gemäß Formel (IV) mit d = 2, d1 = 0, e = 0 bis 40, e1 = 1 bis 5, e2, f und g = 0, R¹ = Methyl, R² = (Formel V), (Formel VI) und/ oder (Formel VII) mit h = 0, j = 3 bis 20, k = 0 bis 20, bevorzugt 0, R' = Methyl oder Ethyl und R" = Wasserstoff.
Erfindungsgemäß können alle erhältlichen Polyethersiloxane eingesetzt werden. DMC-Katalysatoren (B), die gemäß der vorliegenden Erfindung Polyethersiloxane der Komponente b) enthalten, weisen beim Einsatz als Katalysator beispielsweise in Alkoxylierungen von Epoxiden erstaunlich kurze Induktionsperioden auf und zeigen sehr gute Reaktivitäten. Zudem wird ihre Katalysatoraktivität bei der Umsetzung von hohen Anteilen an bzw. reinem Ethylenoxid, insbesondere auch gleich zum Start der Reaktion, nicht negativ beeinflusst. Die Beispiele zeigen hier erstaunliche Fortschritte des erfindungsgemäßen Katalysators beispielsweise im Vergleich zu im Stand der Technik bekannten DMC-Katalysatoren, die mit anderen oberflächenaktiven Substanzen modifiziert wurden, beispielsweise mit Umsetzungsprodukten aus Fettalkoholen mit Alkylenoxiden. Die erfindungsgemäßen Katalysatoren (B) führen also zum einen zu Alkoxylierungsprodukten mit erheblichen Vorteilen in Bezug auf Stabilität und Homogenität und zum anderen erfolgt die Reaktion deutlich schneller und effektiver.

Organische Komplexliganden der Komponente c), die in den erfindungsgemäßen Katalysatoren (B) enthalten sein können, sind wasserlösliche, organische Verbindungen mit Heteroatomen, wie Sauerstoff, Stickstoff, Phosphor oder Schwefel, die mit der Doppelmetallcyanid-Verbindung Komplexe bilden können. Geeignete organische Komplexliganden sind z.B. Alkohole, Aldehyde, Ketone, Ether, Ester, Amide, Harnstoffe, Nitrile, Sulfide und deren Mischungen. Bevorzugte organische Komplexliganden sind wasserlösliche aliphatische Alkohole, wie Ethanol, Isopropanol, n-Butanol, iso-Butanol, sek.-Butanol und tert.-Butanol. Besonders bevorzugt ist tert.-Butanol.
Gewünschtenfalls können die erfindungsgemäßen Katalysatoren (B) als weitere Komponente d) weitere von b) und c) verschiedene komplexbildende Komponenten aufweisen. Bevorzugt handelt es sich bei der komplexbildenden Komponente d) um eine Komponente ausgewählt aus Polyether, Polyester, Polycarbonat, Glycidylether, Glycosid, Carbonsäureester mehrwertiger Alkohole, Polyalkylenglykolsorbitanester, Gallensäure, Salze der Gallensäure, Ester der Gallensäure, Amid der Gallensäure, Cyclodextrin, organisches Phophat, Phosphit, Phosphonat, Phosphonit, Phosphinat oder Phosphinit, eine ionische oberflächen- bzw. grenzflächenaktive Verbindung oder ein α,ß-ungesättigter Carbonsäureester. Besonders bevorzugt handelt es sich um Polyether, insbesondere bevorzugt um Polyethylenglycole oder Polypropylenglycole, Polyethylenglycol- und Polypropylenglycolether, Poly(oxyethylen)-co-poly(oxypropylen), Poly(oxyethylen)-co-poly(oxypropylene)-ether.
Eine bevorzugte Ausführungsform der vorliegenden Erfindung sind daher Verfahren zur Herstellung von Alkoxylierungsprodukten und Alkoxylierungsprodukte erhältlich durch Umsetzung mindestens eines Epoxids (A) in Gegenwart mindestens eines DMC-Katalysators (B), enthaltend
a) ein oder mehrere Doppelmetallcyanid-Verbindungen und
b) ein oder mehrere Polyethersiloxane und
c) einen oder mehrere von b) verschiedenen organischen Komplexliganden
d) einen oder mehrere von b) und c) verschiedene komplexbildende Komponenten, bevorzugt Polyether, wobei der DMC Katalysator (B) durch Umsetzung von wasserlöslichen Metallsalzen mit wasserlöslichen Metallcyanidsalzen zu Doppelmetallcyanid-Verbindungen der Komponente a) in Anwesenheit mindestens eines Polyethersiloxans der Komponente b) erhalten wird. In einer weiterhin bevorzugten Ausführungsform der vorliegenden Erfindung enthalten die zur Alkoxylierung eingesetzten DMC-Katalysatoren (B),
   a) ein oder mehrere Doppelmetallcyanid-Verbindungen ausgewählt aus Zinkhexacyanocobaltat(III), Zinkhexacyanoiridat (III), Zinkhexacyanoferrat(III) und Cobalt(II)hexacyanocobaltat(III),
   b) ein oder mehrere Polyethersiloxane
   c) einen oder mehrere von b) verschiedenen organischen Komplexliganden ausgewählt aus aliphatischen Alkoholen,
   d) optional einen oder mehrere von b) und c) verschiedene komplexbildende Komponenten ausgewählt aus Polyether, Polyester, Polycarbonat, Glycidylether, Glycosid, Carbonsäureester mehrwertiger Alkohole, Polyalkylenglykolsorbitanester, Gallensäure, Salze der Gallensäure, Ester der Gallensäure, Amid der Gallensäure, Cyclodextrin, organisches Phophat, Phosphit, Phosphonat, Phosphonit, Phosphinat oder Phosphinit, eine ionische oberflächen- bzw. grenzflächenaktive Verbindung oder ein α,ß-ungesättigter Carbonsäureester, wobei der DMC Katalysator (B) durch Umsetzung von wasserlöslichen Metallsalzen mit wasserlöslichen Metallcyanidsalzen zu Doppelmetallcyanid-Verbindungen der Komponente a) in Anwesenheit mindestens eines Polyethersiloxans der Komponente b) erhalten wird. In einer ganz besonders bevorzugten Ausführungsform der vorliegenden Erfindung enthalten die DMC-Katalysatoren (B),
      a) eine Doppelmetallcyanid-Verbindung ausgewählt aus Zinkhexacyanocobaltat (III), Zinkhexacyanoferrat(III) und Cobalt(II)hexacyanocobaltat (III) und
      b) ein oder mehrere Polyethersiloxane, bevorzugt der Formel (IV) bei denen bevorzugt die berechnete mittlere Molmasse des Polyethersiloxans von 500 bis 30.000 g/Mol , beträgt und das Polyethersiloxan ein Gewichtsverhältnis von Siloxan-Anteil zu Polyether- Anteil von 1 zu 1 bis 1 zu 10, bevorzugt 1 zu 1,2 bis 1 zu 8, besonders bevorzugt von 1 zu 1,5 bis 1 zu 5, und insbesondere bevorzugt von 1 zu 1,8 bis 1 zu 3, bezogen auf die berechnete mittlere Molmasse des Polyethersiloxans aufweist, besonders bevorzugt mit mit d = 2, d1 = 0, e = 0 bis 40, e1 = 1 bis 5, e2, f und g = 0, R¹ = Methyl, R² = (Formel V), (Formel VI) und/ oder (Formel VII) mit h = 0, j = 3 bis 20, k = 0 bis 20, bevorzugt 0, R' = Methyl oder Ethyl und R" = Wasserstoff;,
      c) ein oder mehrere aliphatische Alkohole, bevorzugt tert.-Butanol und
      d) optional einen oder mehrere Polyether, bevorzugt Polyethylenglycole oder Polypropylenglycole,
wobei mindestens ein Polyethersiloxan der Komponente b) während der Herstellung der Doppelmetallcyanid-Verbindungen der Komponente a) anwesend ist. Der Katalysator (B) ist erhältlich durch Umsetzung von wasserlöslichen Metallsalzen mit wasserlöslichen Metallcyanidsalzen zu Doppelmetallcyanid-Verbindungen der Komponente a), wobei die Umsetzung in Anwesenheit mindestens eines Polyethersiloxans der Komponente b) erfolgt. Bevorzugt sind die Katalysatoren (B) erhältlich indem wasserlösliche Metallsalze der Komponente a1), insbesondere der Formel (I), mit wasserlöslichen Metallcyanidsalzen der Komponente a2), insbesondere der Formel (II), in Anwesenheit mindestens eines Polyethersiloxans der Komponente b), insbesondere der Formel (IV), umgesetzt werden. Überraschenderweise hat sich gezeigt, dass die Anwesenheit mindestens eines Polyethersiloxans der Komponente b) während der Herstellung der Doppelmetallcyanid-Verbindungen der Komponente a) ausschlaggebend ist für die hervorragenden Eigenschaften des Katalysators. In umfangreichen Studien konnte gezeigt werden, dass eine nachträgliche Zugabe von Polyethersiloxanen zu im Stand der Technik beschriebenen DMC-Katalysatoren, beziehungsweise zu auf dem Markt erhältlichen DMC-Katalysatoren nicht die Ergebnisse erzielen können, die erfindungsgemäße DMC-Katalysatoren erreichen.

Erfindungsgemäße Epoxide (A) entsprechen bevorzugt den nachstehend beschriebenen Ausführungsformen. Als Epoxid (A) kann prinzipiell jedes Epoxid eingesetzt werden. Bevorzugt entsprechen die Epoxide (A) einem oder mehreren Epoxiden ausgewählt aus den Alkylenoxiden, Glycidylethern und Epoxidgruppensubstituierte Alkoxysilane. Besonders bevorzugt entsprechen die Epoxide (A) einem oder mehreren Epoxiden ausgewählt aus Ethylenoxid, Propylenoxid, 1,2- oder 2,3-Butylenoxid, Isobutylenoxid, 1,2-Dodecenoxid, Styroloxid, Cyclohexenoxid Vinylcyclohexenoxid, Allylglycidylether, Butylglycidylether, 2-Ethylhexylglycidylether, Cyclohexylglycidylether, Benzylglycidylether, C12/C14-Fettalkoholglycidylether, Phenylglycidylether, p-tert.-Butylphenylglycidylether, o-Kresylglycidylether, Glycidylmethacrylat, Glycidylacrylat, Neodecansäureglycidylester, 1,2-Ethylglycidylether, 1,4-Butylglycidylether, 1,6-Hexyldiglycidylether, 3-Glycidyloxypropyltrimethoxysilan, 3-Glycidyloxypropyltriethoxysilan, 3-Glycidyloxypropyltripropoxysilan, 3-Glycidyloxypropyltriisopropoxysilan, Bis(3-Glycidyloxypropyl)dimethoxysilan, Bis(3-Glycidyloxypropyl)diethoxysilan, 3-Glycidyloxyhexyltrimethoxysilan, 3-Glycidyloxyhexyltriethoxysilan, 3-Glycidyloxypropylmethyldimethoxysilan und/oder 3-Glycidyloxypropylethyldiethoxysilan. Besonders bevorzugt ist mindestens ein Epoxid (A) Ethylenoxid. Besonders bevorzugt werden in dem erfindungsgemäßen Verfahren und zum Erhalt der erfindungsgemäßen Produkte mindestens 20 Mol-% Ethylenoxid, bevorzugt mindestens 30 Mol-%, besonders bevorzugt mindestens 40 Mol-%, insbesondere bevorzugt mindestens 50 Mol-% und ganz besonders bevorzugt mindestens 60 Mol-% Ethylenoxid, bezogen auf die gesamte molare Menge an Epoxid (A), als Epoxid (A) eingesetzt. Bei den Alkoxylierungsprodukten mit hohen Anteilen an Ethylenoxid zeigen sich die Vorteile der Homogenität und der außerordentlich hohen Lagerstabilität in ganz besonderem Maße.
Ganz besonders bevorzugt können in den erfindungsgemäßen Verfahren, durch die die erfindungsgemäßen Alkoxylierungsprodukte erhalten werden, in einem ersten Schritt DMC Katalysator (B) mit Ethylenoxid bevorzugt in Anwesenheit von Starter (C), Definition der Starter (C) folgt, umgesetzt werden und in einem zweiten und gegebenenfalls weiteren Schritten Ethylenoxid und/oder von Ethylenoxid verschiedene weitere Epoxide (A) zugegeben werden. Besonders bevorzugt ist, wenn in einem letzten Reaktionsschritt nachdem alle im Reaktionsgemisch vorhandenen Epoxide (A) weitestgehend in der Reaktion umgesetzt worden sind (der Fachmann kann den Fortgang der Reaktion allgemein durch die Überwachung des Drucks einschätzen) nochmal reines Ethylenoxid als einziges Epoxid (A) zugegeben wird. Die so erhaltenen Alkoxylierungsprodukte haben mindestens eine Ethylenoxideinheit an jedem Kettenende. Diese Ethylenoxideinheiten haben jede noch eine freie, primäre OH-Gruppe, welche sich durch eine besonders hohe Reaktivität positiv auszeichnet.

In erfindungsgemäßen Verfahren zur Herstellung von Alkoxylierungsprodukten und Alkoxylierungsprodukten erhältlich durch dieses Verfahren werden neben Epoxiden (A) und DMC Katalysatoren (B) bevorzugt OH-funktionalisierte Starter (C) eingesetzt. Als Starter (C) kann prinzipiell jede Verbindung eingesetzt werden, die mindestens eine OH-Gruppe trägt und den DMC-Katalysator nicht vergiftet, also deaktiviert. Prinzipiell kann dazu beispielsweise jeder aliphatische Alkohol mit mindestens 3 Kohlenstoffatomen eingesetzt werden, ebenso wie aromatische Alkohole, wobei die zuvor genannten Verbindungen mit weiteren funktionellen Gruppen versehen sein können, solange diese die Katalysatoraktivität nicht negativ beeinflussen oder auch jede Art von Polyether beliebiger Länge, sowie Polymere auf Basis anderer Monomere, die mindestens eine OH-Funktion tragen. Bevorzugte Starter (C) sind ausgewählt aus der Gruppe der Alkohole mit mindestens 3 Kohlenstoffatomen, der Polyetherole oder der Phenole. Besonders bevorzugte Starter (C) sind ausgewählt aus der Gruppe aus Allylalkohol, Butanol, Octanol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, Verbindungen die sich von Naturstoff basierenden, Hydroxylgruppen tragende Verbindungen, ableiten, oder Polyetherole mit einer Molmasse von 200 bis 5000 g/mol. Die Starter (C) weisen vorzugsweise eine Molmasse von 32 bis 5000 g/mol, insbesondere 58 bis 4983 g/mol auf. Es kann vorteilhaft sein, wenn die Starter (C) von 0 bis 7, bevorzugt von 1 bis 3 Hydroxylgruppen aufweisen.
Vorzugsweise werden niedermolekulare Polyetherole mit 1 bis 8 Hydroxylgruppen und gewichtsmittleren Molmassen von 100 bis 5000 g/mol, die vorzugsweise ihrerseits zuvor durch DMC-katalysierte Alkoxylierung oder durch alkalische Katalyse hergestellt wurden, als Startverbindungen verwendet. Besonders geeignet sind Polypropylenglycole, Polyethylenglycole, Poly(ethylen)-co-(propylen)glycole, Polybutylenglycole, Poly(propylen)-co-(butylen)glycole, Poly(butylen)-co-(ethylen)glycole, die mindestens eine OH-Gruppe haben. Unter diesen Polyalkylenglycolen sind insbesondere solche Verbindungen vorteilhaft, die sich von Methanol, Butanol, Allylalkohol, Octanol, Decanol, Dodecanol, Butandiol, Hexandiol, Glycerin ableiten.

In erfindungsgemäßen Verfahren zur Herstellung von Alkoxylierungsprodukten und Alkoxylierungsprodukten erhältlich durch dieses Verfahren können neben Epoxiden (A) DMC Katalysatoren (B) und gegebenenfalls OH-funktionalisierte Starter (C) weiterhin weitere Monomere (D) eingesetzt werden. Als weitere Monomere (D) können prinzipiell alle Monomere eingesetzt werden, die sich zur Alkoxylierung mit Epoxiden (A) eignen. Beispiele für solche Verbindungen sind Dicarbonsäuren, Kohlenstoffdioxid, cyclische Anhydride, Lactone, zum Beispiel ε-Caprolacton, δ-Valerolacton.

Die Molmasse Mw der erfindungsgemäßen Alkoxylierungsprodukte ist über weite Bereiche variabel. Vorzugsweise beträgt die Molmasse Mw der erfindungsgemäßen Alkoxylierungsprodukte von 200 bis 50.000 g/mol, bevorzugt von 400 bis 25.000 g/mol, und besonders bevorzugt von 600 bis 15.000 g/mol.
Bevorzugte Alkoxylierungsprodukte weisen mindestens 30 bis 100 Mol-%, bevorzugt 40 bis 90 Mol-%, Ethylenoxid, bezogen auf die Gesamtmenge an eingesetzten Alkylenoxiden, also bezogen auf die gesamte molare Menge der Epoxide (A), auf. Die erfindungsgemäß hergestellten Alkoxylierungsprodukte weisen sich dadurch aus, dass die Menge an Ethylenoxid auf alle Alkoxylierungsprodukte homogen verteilt ist und die Abweichung des Ethylenoxidanteils jedes einzelnen Alkoxylierungsproduktes weniger als 10 Gew-%, insbesondere weniger als 6 Gew-% in Bezug auf den über alle Alkoxylierungsprodukte, die in einer Reaktion hergestellt wurden, gemittelten Gewichtsanteil an Ethylenoxid aufweist. Dies zeigt sich ebenfalls dadurch, dass die einzelnen Alkoxylierungsprodukte in Bezug auf alle Alkoxylierungsprodukte, die in einer Reaktion hergestellt wurden, in ihrem Anteil an Ethylenoxid um weniger als 5 Mol, insbesondere weniger als 3 Mol von dem über alle Alkoxylierungsprodukte, die in einer Reaktion hergestellt wurden, gemittelten Molaren Anteil an Ethylenoxid abweichen. In Mol-% bedeutet dies, dass der Ethylenoxidanteil jedes einzelnen Alkoxylierungsproduktes um weniger als 30 Mol -%, insbesondere weniger als 25 Mol-%, und ganz besonders weniger als 20 Mol-%, von dem mittleren molaren Anteil an Ethylenoxid in Bezug auf den über alle Alkoxylierungsprodukte, die in einer Reaktion hergestellt wurden, gemittelten molaren Anteil an Ethylenoxid abweicht. Alkoxylierungsprodukte, die mit DMC-Katalysatoren ohne Polyethersiloxan hergestellt wurden, weisen dahingegen deutlich stärkere Abweichungen von mindestens 50 Mol-% in Bezug auf den über alle Alkoxylierungsprodukte, die in einer Reaktion hergestellt wurden, gemittelten molaren Anteil an Ethylenoxid auf. Dies führt dazu, dass die nicht erfindungsgemäß hergestellten Alkoxylierungsprodukte nicht lagerstabil sind und schon nach kurzer Zeit Phasentrennung des Produktes auftritt. Erfindungsgemäß hergestellte Alkoxylierungsprodukte sind dahingegen homogen, das heißt, dass sie sich in dem strukturellen Aufbau der einzelnen Alkoxylierungsprodukte so gleichen, dass auch bei mehrwöchiger Lagerung keine Phasentrennung erfolgt.

Bevorzugte erfindungsgemäße Verfahren zur Herstellung der Alkoxylierungsprodukte umfassen die im Folgenden beschriebenen Schritte.
Zum Starten der Alkoxylierungsreaktion nach erfindungsgemäßem Verfahren wird bevorzugt das Startgemisch, umfassend, bevorzugt bestehend aus, einem oder mehreren OH-funktionellen Startern (C) und dem DMC Katalysator (B), der gegebenenfalls zuvor in einem Suspendiermittel aufgeschlämmt wurde, im Reaktor vorgelegt. Als Suspensionsmittel können entweder ein Polyether oder inerte Lösungsmittel benutzt werden oder vorteilhaft auch eine oder mehrere Starter (C) oder alternativ ein Gemisch aus den genannnten Komponenten. Der vorgelegten Startmischung wird zumindest eine der Epoxid (A), bevorzugt Ethylenoxid, zudosiert. Zum Starten der Alkoxylierungsreaktion und zur Aktivierung des DMC-Katalysators (B) wird zunächst meist nur ein Teil der insgesamt zu dosierenden Menge an Epoxid (A) zugefügt. Das molare Verhältnis von Epoxid (A) zu OH-Gruppen des Starters (C), liegt in der Startphase dabei vorzugsweise bei 0,1 bis 10 zu 1, bevorzugt bei 0,2 bis 5 zu 1, insbesondere bei 0,4 bis 3 zu 1. Es kann vorteilhaft sein, wenn vor der Zugabe des Epoxids (A) gegebenenfalls vorhandene, die Reaktion inhibierende Stoffe aus dem Reaktionsgemisch z.B. durch Destillation entfernt werden.

Die Katalysatorkonzentration des Katalysators (B) im Reaktionsgemisch umfassend Epoxid (A) und gegebenenfalls weitere Verbindungen liegt vorzugsweise bei > 0 bis 2.000 wppm (Massen-ppm), bevorzugt bei 30 bis 500 wppm, bezogen auf die Gesamtmasse des Reaktionsgemisches. Vorzugsweise wird der Katalysator nur einmal in den Reaktor dosiert. Die Katalysatormenge ist vorzugsweise so einzustellen, dass eine ausreichende katalytische Aktivität für das Verfahren gegeben ist. Der Katalysator kann als Feststoff oder in Form einer Katalysatorsuspension dosiert werden.

Das Starten der exothermen Reaktion kann z.B. durch eine Druck- und/oder Temperaturüberwachung detektiert werden. Ein plötzlicher Abfall des Drucks im Reaktor zeigt bei gasförmigen Alkylenoxiden an, dass das Alkylenoxid eingebaut wird, die Reaktion somit gestartet und das Ende der Startphase erreicht ist. Bei nicht gasförmigen Glycidylethern/-estern oder epoxidfunktionellen Alkoxysilanen wird das Anspringen der Reaktion durch die einsetzende Wärmetönung angezeigt.
Nach der Startphase, also nach Initialisierung der Reaktion, werden bevorzugt je nach angestrebter Molmasse entweder gleichzeitig weitere Starter (C) und weiteres Epoxid (A) oder nur weiteres Epoxid (A) zudosiert. Alternativ kann auch ein beliebiges Gemisch von unterschiedlichen Epoxiden (A) addiert werden. Die erfindungsgemäß einsetzbaren Epoxide (A) können auch in beliebiger Reihenfolge nacheinander addiert werden. Die Umsetzung kann z.B. zwecks Viskositätserniedrigung des Reaktionsgemisches in einem inerten Lösemittel durchgeführt werden. Als inerte Lösungsmittel eignen sich Kohlenwasserstoffe, insbesondere Toluol, Xylol oder Cyclohexan. In den erfindungsgemäßen Produkten beträgt das molare Verhältnis der Summe der dosierten Epoxide, inklusive der bereits in der Startphase zugefügten Epoxide, bezogen auf die eingesetzte Startverbindung, insbesondere bezogen auf die Anzahl der OH-Gruppen der eingesetzten Startverbindung, dabei vorzugsweise 1 bis 10⁵ zu 1, insbesondere 1 bis 10⁴ zu 1.
Die Anlagerung der Epoxidverbindungen geschieht vorzugsweise bei einer Temperatur von 60 bis 250 °C, besonders bevorzugt bei einer Temperatur von 90 bis 160 °C. Der Druck, bei dem die Alkoxylierung stattfindet, beträgt vorzugsweise 0,02 bar bis 20 bar, besonders bevorzugt 0,05 bis 10 bar und insbesondere von 0,2 bis 2 bar absolut. Durch die Durchführung der Alkoxylierung bei Unterdruck kann die Reaktion sehr sicher durchgeführt werden. Gegebenenfalls kann die Alkoxylierung in Gegenwart eines Inertgases (z.B. Stickstoff) oder - zur Herstellung von Polyethercarbonaten - in Gegenwart von Kohlendioxid auch bei einem Überdruck von dann vorzugsweise 1 bis 20 bar absolut durchgeführt werden.
In dem erfindungsgemäßen Verfahren können weitere Monomere (D) eingesetzt werden. Die für die Herstellung von estermodifizierten Polyethern einsetzbaren Lactone oder cyclischen Anhydride der Monomere (D) können sowohl bereits in der Startphase dem Starter-Katalysator-Gemisch zugefügt als auch zu einem späteren Zeitpunkt parallel zur Epoxiddosierung zugeführt werden. Die genannten Comonomere können auch jeweils nacheinander alternierend mit Epoxiden (A) in den Reaktor dosiert werden.
Das molare Verhältnis der Epoxidmonomeren (A) zu cyclischen Anhydriden der Monomere (D) ist dabei variabel. Üblicherweise werden mindestens äquimolare Mengen Epoxidmonomere (A) bezogen auf Anhydride eingesetzt. Bevorzugt ist die Verwendung der Epoxide (A) in einem molaren Überschuss, um die vollständige Anhydridumsetzung zu gewährleisten. Lactone der Monomere (D) können während der Alkoxylierung wahlweise im stöchiometrischen Unterschuss oder Überschuss bezogen auf die Epoxidmonomere (A) zugefügt werden. Zur Herstellung von carbonatmodifizierten Polyethern findet die Alkoxylierung in Gegenwart von entweder gasförmig oder als Trockeneis zugeführtem festen Kohlendioxid statt. Vorzugsweise wird Kohlendioxidgas verwendet, das sowohl bereits vor dem Start der Reaktion, also bereits während der Initialisierungsstufe, dem System aus Starter (C) und DMC Katalysator (B) zugeführt werden kann, als auch während der nachfolgenden Phase des Zulaufs von Epoxidmonomeren und evtl. weiterer Comonomere (D). Um den Carbonatgehalt im Endprodukt zu erhöhen, ist es vorteilhaft, entsprechend dem Kohlendioxidverbrauch, erkennbar an der Druckabnahme im Autoklaven, im Verlaufe der Umsetzung weiteres Kohlendioxid kontinuierlich oder portionsweise zuzudosieren. Vorzugsweise geschieht die Reaktion bei Drücken von weniger als 100 bar, besonders bevorzugt bei weniger als 20 bar.
Nach der Monomer-Addition und eventueller Nachreaktion zur Vervollständigung des Monomerumsatzes der Epoxide (A) und der Monomere (D) werden evtl. vorhandene Reste von nicht abreagiertem Monomeren (A) und (D) und eventuell weiteren leicht flüchtigen Bestandteilen, üblicherweise durch Vakuumdestillation, Gasstrippen oder andere Methoden der Desodorierung entfernt. Die Entfernung leichtflüchtiger Nebenkomponenten kann sowohl batchweise als auch kontinuierlich erfolgen. Beim erfindungsgemäßen Verfahren auf Basis der DMC-Katalyse kann im Normalfall auf eine Filtration verzichtet werden.

Die Verfahrensschritte können bei identischen oder verschiedenen Temperaturen ausgeführt werden. Die im Reaktor zum Reaktionsstart vorgelegte Mischung aus Starter (C), DMC-Katalysator (B) und gegebenenfalls Suspensionsmittel kann vor Beginn der Monomerdosierung von Epoxid (A) und gegebenenfalls weiteren Monomeren (D) gemäß der Lehre von WO 98/52689 durch Strippen vorbehandelt werden. Dabei wird über die Reaktorzuführung ein Inertgas dem Reaktionsgemisch zugemischt und mit Hilfe einer an das Reaktorsystem angeschlossenen Vakuumanlage werden leichter flüchtige Komponenten durch Anlegen eines Unterdrucks aus dem Reaktionsgemisch entfernt. Auf diese einfache Weise können aus dem Reaktionsgemisch Stoffe, die den Katalysator inhibieren können, wie z. B. niedere Alkohole oder Wasser, entfernt werden. Die Zugabe von Inertgas und das gleichzeitige Entfernen der leichter flüchtigen Komponenten kann insbesondere beim Anfahren/Starten der Reaktion von Vorteil sein, da durch die Zugabe der Reaktanden oder durch Nebenreaktionen auch inhibierende Verbindungen in das Reaktionsgemisch gelangen können.

Der Gegenstand der vorliegenden Erfindung wird nachfolgend an Hand von Beispielen näher erläutert, ohne dass der Gegenstand der Erfindung auf diese beispielhaften Ausführungsformen beschränkt sein soll.

### Beispiele:

### Verwendete Chemikalien:

Zinkchlorid (≥ 98%) und Kaliumhexacyanocobaltat(III) wurden von Sigma-Aldrich bezogen. Tert-Butanol (≥ 99%) wurde von Carl Roth bezogen. Doppelmetallcyanidkatalysator (ARCOL) wurde von Bayer AG bezogen. Blockpolyether Pluronic® 6100 wurde von BASF bezogen. Propylenoxid und Ethylenoxid wurde von GHC Gerling, Holz & CO Handels GmbH bezogen.

### GPC-Messungen:

GPC-Messungen zur Bestimmung der Polydispersität und gewichtsmittleren Molmassen Mw wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, Rl-Detektor, Auswertung der Polyether erfolgte gegen Polypropylenglykol-Standard (76-6000 g/mol).

### Bestimmung des Gehalts an Ethylenoxid im Polyether:

Die Bestimmung des Gehalts an EO erfolgte mit Hilfe der ¹H-NMR-Spektroskopie. Verwendet wurde ein NMR Spektrometer vom Typ Bruker Avance 400, die Proben wurden dazu in CDCl₃ gelöst.

### Bestimmung der OH-Zahl:

Hydroxylzahlen wurden nach der Methode DGF C-V 17a (53) der deutschen Gesellschaft für Fettwissenschaft bestimmt. Dabei wurden die Proben mit Essigsäureanhydrid in Gegenwart von Pyridin acetyliert und der Verbrauch an Essisäureanhydrid durch Titration mit 0,5 N Kalilauge in Ethanol gegen Phenolphthalein bestimmt.

Verwendete Zentrifuge ist von der Firma Sigma Laborzentrifugen GmbH, Modell 4-15.

### Parametereinstellungen:

Drehzahl: 8000 min⁻¹
   Zentrifugationszeiteit: 20 min
   RZB : 10375

In den nachfolgenden Beispielen wurde beispielhaft als komplexbildende Komponente d) Polypropylenglycol (PPG)mit der Molmasse M_{OH} = 765 g/mol, die über die OH-Zahl ermittelt wurde, eingesetzt.

### Beispiel A: Herstellung der Doppelmetallcyanidkatalysatoren:

### Beispiel A1: Vergleichsbeispiel ohne Additiv

In einem Mehrhalskolben mit KPG-Blatt-Rührer, Rückflusskühler, Inertgaszuleitung und Temperaturfühler wurden 3,68 g Kaliumhexacyanocobaltat(III) gelöst in 40 mL dest. Wasser vorgelegt und unter Stickstoffatmosphere auf 50 °C erwärmt. Separat wurde eine Lösung aus 13,63 g Zinkchlorid, 20 mL tert-Butanol in 100 mL dest. Wasser hergestellt und mittels eines Tropftrichters in die vorgelegte Lösung innerhalb ca. einer Stunde zugetropft. Anschließend wurde eine weitere Lösung bestehend aus 3,5 g PPG, 1 mL dest. Wasser und 20 mL tert-Butanol zum Reaktionsgemisch zugetropft. Nach einer 10 minütigen Nachrührzeit wurde die entstandene Suspension filtriert. Der Filterkuchen wurde im Kolben in einer Lösung aus 40 mL dest. Wasser und 80 mL tert-Butanol aufgeschlämmt, erneut filtriert mit dem oben genannten tert-Butanol/Wasser-Gemisch gewaschen und anschließend bei 70 °C in einem Trockenschrank über Nacht getrocknet. Man enthielt als Produkt 4,93 g weißes Pulver, das über CaCl₂ im Exsikkator aufbewahrt wurde.

### Beispiel A2: DMC Herstellung unter Verwendung eines Polyethersiloxans mit 36 Gew-% Siloxan-Anteil und 64 Gew-% Polyether-Anteil

In einem Mehrhalskolben mit KPG-Blatt-Rührer, Rückflusskühler, Inertgaszuleitung und Temperaturfühler wurden 3,68 g Kaliumhexacyanocobaltat(III) gelöst in 40 mL dest. Wasser vorgelegt und unter Stickstoffatmosphere auf 50 °C erwärmt. Separat wurde eine Lösung aus 13,63 g Zinkchlorid, 20 mL tert-Butanol, 1 g eines Polyethersiloxans mit 36 Gew-% Siloxan-Anteil und 64 Gew-% Polyether-Anteil in 100 mL dest. Wasser hergestellt und mittels eines Tropftrichters in die vorgelegte Lösung innerhalb ca. einer Stunde zugetropft. Anschließend wurde eine weitere Lösung bestehend aus 3,5 g PPG, 1 mL dest. Wasser, 1 g eines Polyethersiloxans mit 36 Gew-% Siloxan-Anteil und 64 Gew-% Polyether-Anteil und 20 mL tert-Butanol zum Reaktionsgemisch zugetropft. Nach einer 10 minütigen Nachrührzeit wurde die entstandene Suspension filtriert. Der Filterkuchen wurde im Kolben in einer Lösung aus 40 mL dest. Wasser und 80 mL tert-Butanol aufgeschlämmt, erneut filtriert mit dem oben genannten tert-Butanol/Wasser-Gemisch gewaschen und anschließend bei 70 °C in einem Trockenschrank über Nacht getrocknet. Man enthielt als Produkt 5,18 g weißes Pulver, das über CaCl₂ im Exsikkator aufbewahrt wurde.

### Beispiel A3: Vergleichsbeispiel 3 (DMC Herstellung unter Verwendung von Pluronic 6100)

In einem Mehrhalskolben mit KPG-Blatt-Rührer, Rückflusskühler, Inertgaszuleitung und Temperaturfühler wurden 3,68 g Kaliumhexacyanocobaltat(III) gelöst in 40 mL dest. Wasser vorgelegt und unter Stickstoffatmosphere auf 50 °C erwärmt. Separat wurde eine Lösung aus 13,63 g Zinkchlorid, 20 mL tert-Butanol, 1 g Pluronic 6100 in 100 mL dest. Wasser hergestellt und mittels eines Tropftrichters in die vorgelegte Lösung innerhalb ca. einer Stunde zugetropft. Anschließend wurde eine weitere Lösung bestehend aus 3,5 g PPG, 1 mL dest. Wasser, 1 g Pluronic 6100 und 20 mL tert-Butanol zum Reaktionsgemisch zugetropft. Nach einer 10 minütigen Nachrührzeit wurde die entstandene Suspension filtriert. Der Filterkuchen wurde im Kolben in einer Lösung aus 40 mL dest. Wasser und 80 mL tert-Butanol aufgeschlämmt, erneut filtriert mit dem oben genannten tert-Butanol/WasserGemisch gewaschen und anschließend bei 70 °C in einem Trockenschrank über Nacht getrocknet. Man enthielt als Produkt 4,8 g weißes Pulver, das über CaCl₂ im Exsikkator aufbewahrt wurde.

### Beispiel A4: DMC Herstellung unter Verwendung eines Polyethersiloxans mit 32 Gew-% Siloxan-Anteil und 68 Gew-% Polyether-Anteil

In einem Mehrhalskolben mit KPG-Blatt-Rührer, Rückflusskühler, Inertgaszuleitung und Temperaturfühler wurden 3,68 g Kaliumhexacyanocobaltat(III) gelöst in 40 mL dest. Wasser vorgelegt und unter Stickstoffatmosphere auf 50 °C erwärmt. Separat wurde eine Lösung aus 13,63 g Zinkchlorid, 20 mL tert-Butanol, 1 g eines Polyethersiloxans mit 32 Gew-% Siloxan-Anteil und 68 Gew-% Polyether-Anteil in 100 mL dest. Wasser hergestellt und mittels eines Tropftrichters in die vorgelegte Lösung innerhalb ca. einer Stunde zugetropft. Anschließend wurde eine weitere Lösung bestehend aus 3,5 g PPG, 1 mL dest. Wasser, 1 g eines Polyethersiloxans mit 32 Gew-% Siloxan-Anteil und 68 Gew-% Polyether-Anteil und 20 mL tert-Butanol zum Reaktionsgemisch zugetropft. Nach einer 10 minütigen Nachrührzeit wurde die entstandene Suspension filtriert. Der Filterkuchen wurde im Kolben in einer Lösung aus 40 mL dest. Wasser und 80 mL tert-Butanol aufgeschlämmt, erneut filtriert mit dem oben genannten tert-Butanol/Wasser-Gemisch gewaschen und anschließend bei 70 °C in einem Trockenschrank über Nacht getrocknet. Man enthielt als Produkt 4,69 g weißes Pulver, das über CaCl₂ im Exsikkator aufbewahrt wurde.

### Beispiel A5: Vergleichsbeispiel 2 (ARCOL behandelt mit einem Polyethersiloxan mit 32 Gew-% Siloxan-Anteil und 68 Gew-% Polyether-Anteil)

In einem Mehrhalskolben mit KPG-Blatt-Rührer, Rückflusskühler, Inertgaszuleitung und Temperaturfühler wurden 0,5 g ARCOL Katalysator in eine Lösung aus 0,5 mL dest. Wasser, 10 mL tert-Butanol und 2 g eines Polyethersiloxans mit 32 Gew-% Siloxan-Anteil und 68 Gew-% Polyether-Anteil gegeben und 60 min bei RT gerührt. Die entstandene Suspension wurde filtriert. Der Filterkuchen wurde bei 70 °C in einem Trockenschrank über Nacht getrocknet. Man enthielt als Produkt 0,552 g weißes Pulver, das über CaCl₂ im Exsikkator aufbewahrt wurde.

### Beispiel A6: (Nicht erfinderisch)

DMC Herstellung unter Verwendung eines Polyethersiloxans mit 32 Gew-% Siloxan-Anteil und 68 Gew-% Polyether-Anteil nur in PPG-Lösung In einem Mehrhalskolben ausgestattet mit KPG-Blatt-Rührer, Rückflusskühler, Inertgaszuleitung und Temperaturfühler wurden 3,32 g Kaliumhexacyanocobaltat(III) gelöst in 40 mL dest. Wasser vorgelegt und unter Stickstoffatmosphere auf 50 °C erwärmt. Separat wurde eine Lösung aus 13,63 g Zinkchlorid, 20 mL tert-Butanol in 100 mL dest. Wasser hergestellt und mittels eines Tropftrichters in die vorgelegte Lösung innerhalb ca. einer Stunde zugetropft. Anschließend wurde eine weitere Lösung bestehend aus 3,5 g PPG, 1 mL dest. Wasser, 1 g eines Polyethersiloxans mit 32 Gew-% Siloxan-Anteil und 68 Gew-% Polyether-Anteil und 20 mL tert-Butanol zum Reaktionsgemisch zugetropft. Nach einer 10 minütigen Nachrührzeit wurde die entstandene Suspension filtriert. Der Filterkuchen wurde im Kolben in einer Lösung aus 40 mL dest. Wasser und 80 mL tert-Butanol aufgeschlämmt, erneut filtriert mit dem oben genannten tert-Butanol/Wasser-Gemisch gewaschen und anschließend bei 70 °C in einem Trockenschrank über Nacht getrocknet. Man enthielt als Produkt 4,5 g weißes Pulver, das über CaCl₂ im Exsikkator aufbewahrt wurde.

### Beispiel A7: (Nicht erfinderisch)

### DMC Herstellung unter Verwendung von eines Polyethersiloxans mit 32 Gew-% Siloxan-Anteil und 68 Gew-% Polyether-Anteil nur in Waschlösung

In einem Mehrhalskolben ausgestattet mit KPG-Blatt-Rührer, Rückflusskühler, Inertgaszuleitung und Temperaturfühler wurden 3,32 g Kaliumhexacyanocobaltat(III) gelöst in 40 mL dest. Wasser vorgelegt und unter Stickstoffatmosphere auf 50 °C erwärmt. Separat wurde eine Lösung aus 13,63 g Zinkchlorid, 20 mL tert-Butanol in 100 mL dest. Wasser hergestellt und mittels eines Tropftrichters in die vorgelegte Lösung innerhalb ca. einer Stunde zugetropft. Anschließend wurde eine weitere Lösung bestehend aus 3,5 g PPG, 1 mL dest. Wasser und 20 mL tert-Butanol zum Reaktionsgemisch zugetropft. Nach einer 10 minütigen Nachrührzeit wurde die entstandene Suspension filtriert. Der Filterkuchen wurde im Kolben in einer Lösung aus 40 mL dest. Wasser, 1 g eines Polyethersiloxans mit 32 Gew-% Siloxan-Anteil und 68 Gew-% Polyether-Anteil und 80 mL tert-Butanol aufgeschlämmt, erneut filtriert und anschließend bei 70 °C in einem Trockenschrank über Nacht getrocknet. Man enthielt als Produkt 5,07 g weißes Pulver, das über CaCl₂ im Exsikkator aufbewahrt wurde.

### Beispiel B: Herstellung von Polyetherpolyolen (Ethoxylate):

In den nachfolgenden Beispielen wurde als Starterpolyether beispielhaft Poly(oxypropylen)-monobutylether mit der Molmasse M_{OH} = 384 g/mol, die über die OH-Zahl ermittelt wurde, eingesetzt. Prinzipiell können die Synthesen mit jedem Starter durchgeführt werden, der eine oder mehre Hydroxygruppen aufweist und der sich zum Einsatz in DMC-Katalysierten Reaktionen eignet.

### Beispiel B1: Katalysator aus Beispiel A1

In einem 5 Liter Autoklaven wurden als Starter 255 g Poly(oxypropylen)-monobutylether und 96 mg DMC-Katalysator A1 vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 40 g Ethylenoxid zugeführt. Nach Anspringen der Reaktion und Innendruckabfall wurden zunächst weitere 252 g Ethylenoxid zudosiert. Da keine Druckabnahme im Reaktor beobachtet wurde, wurde die Zugabe von Ethylenoxid abgebrochen und der Reaktor desodoriert.

### Beispiel B2: Katalysator aus Beispiel A2

In einem 5 Liter Autoklaven wurden als Starter 255 g Poly(oxypropylen)-monobutylether und 96 mg DMC-Katalysator A2 vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 40 g Ethylenoxid zugeführt. Nach Anspringen der Reaktion und Innendruckabfall wurden unter Kühlen zunächst weitere 252 g Ethylenoxid zudosiert. Es schloss sich eine 40-minütige Nachreaktion bei 130 °C mit nachfolgender Entgasung an. Dabei wurden flüchtige Anteile wie restliches Ethylenoxid im Vakuum bei 130 °C abdestilliert. Das Alkoxylierungsprodukt wurde auf unter 90 °C abgekühlt und aus dem Reaktor abgelassen.
Das Produkt hatte It. GPC eine gewichstmittlere Molmasse von 783 g/mol und eine Polydispersität Mw/Mn von 1,1. Die ermittelte OH-Zahl beträgt 72,5. Induktionsperiode: 27 min

### Beispiel B3: (Vergleichsbeispiel) Katalysator aus Beispiel A3

In einem 5 Liter Autoklaven wurden als Starter 255 g Poly(oxypropylen)-monobutylether und 96 mg DMC-Katalysator A3 vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 40 g Ethylenoxid zugeführt. Nach Anspringen der Reaktion und Innendruckabfall wurden unter Kühlen weitere 252 g Ethylenoxid zudosiert, wobei im Verlauf der Polymerisation eine Abnahme der Reaktionsgeschwindigkeit zu verzeichnen war. Es schloss sich eine 40-minütige Nachreaktion bei 130 °C mit nachfolgender Entgasung an. Dabei wurden flüchtige Anteile wie restliches Ethylenoxid im Vakuum bei 130 °C abdestilliert. Das Alkoxylierungsprodukt wurde auf unter 90 °C abgekühlt und aus dem Reaktor abgelassen.
Das Produkt hatte It. GPC eine gewichstmittlere Molmasse von 929 g/mol und eine Polydispersität Mw/Mn von 1,11. Die ermittelte OH-Zahl beträgt 69,0.
Induktionsperiode: 44 min

### Beispiel B4: Katalysator aus Beispiel A4

In einem 5 Liter Autoklaven wurden als Starter 255 g Poly(oxypropylen)-monobutylether und 96 mg DMC-Katalysator A4 vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 40 g Ethylenoxid zugeführt. Nach Anspringen der Reaktion und Innendruckabfall wurden unter Kühlen zunächst weitere 252 g Ethylenoxid zudosiert. Es schloss sich eine 40-minütige Nachreaktion bei 130 °C mit nachfolgender Entgasung an. Dabei wurden flüchtige Anteile wie restliches Ethylenoxid im Vakuum bei 130 °C abdestilliert. Das Alkoxylierungsprodukt wurde auf unter 90 °C abgekühlt und aus dem Reaktor abgelassen.
Das Produkt hatte It. GPC eine gewichstmittlere Molmasse von 810 g/mol und eine Polydispersität Mw/Mn von 1,09. Die ermittelte OH-Zahl beträgt 72,8.
Induktionsperiode: 24 min

### Beispiel B5: (Vergleichsbeispiel) Katalysator aus Beispiel A5

In einem 5 Liter Autoklaven wurden als Starter 255 g Poly(oxypropylen)-monobutylether und 96 mg DMC-Katalysator A5 vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 40 g Ethylenoxid zugeführt. Nach Anspringen der Reaktion und Innendruckabfall wurden unter Kühlen weitere 252 g Ethylenoxid zudosiert. Es schloss sich eine 40-minütige Nachreaktion bei 130 °C mit nachfolgender Entgasung an. Dabei wurden flüchtige Anteile wie restliches Ethylenoxid im Vakuum bei 130 °C abdestilliert. Das Alkoxylierungsprodukt wurde auf unter 90 °C abgekühlt und aus dem Reaktor abgelassen.
Das Produkt hatte It. GPC eine gewichstmittlere Molmasse von 895 g/mol und eine Polydispersität Mw/Mn von 1,08. Die ermittelte OH-Zahl beträgt 67,1.
Induktionsperiode: 38 min

### Beispiel B6: (Nicht erfinderisch) Katalysator aus Beispiel A6

In einem 5 Liter Autoklaven wurden als Starter 255 g Poly(oxypropylen)-monobutylether und 96 mg DMC-Katalysator A6 vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 40 g Ethylenoxid zugeführt. Nach Anspringen der Reaktion und Innendruckabfall wurde unter Kühlen zunächst weiter Ethylenoxid zudosiert. Nach dem 252 g Ethylenoxid bereits zugegeben waren, fiel der Innendruck im Reaktor nicht vollständig auf den ursprünglichen Wert ab, sodass am Ende der Polymerisation eine Restmenge an EO abdestilliert werden musste.

### Beispiel B8: (Vergleichsbeispiel) Katalysator aus Beispiel A7

In einem 5 Liter Autoklaven wurden als Starter 255 g Poly(oxypropylen)-monobutylether und 96 mg DMC-Katalysator A7 vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 40 g Ethylenoxid zugeführt. Da nach 130 min der Innendruck nicht auf den ursprünglichen Wert abfiel und auch nicht mehr abnahm, wurde die Restmenge an EO abdestilliert und die Polymerizationsreaktion abgebrochen.

### Beispiel B7: ARCOL als Katalysator

In einem 5 Liter Autoklaven wurden als Starter 255 g Poly(oxypropylen)-monobutylether und 96 mg DMC-Katalysator ARCOL vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 40 g Ethylenoxid zugeführt. Nach Anspringen der Reaktion und Innendruckabfall wurden unter Kühlen zunächst weitere 252 g Ethylenoxid zudosiert. Es schloss sich eine 40-minütige Nachreaktion bei 130 °C mit nachfolgender Entgasung an. Dabei wurden flüchtige Anteile wie restliches Ethylenoxid im Vakuum bei 130 °C abdestilliert. Das Alkoxylierungsprodukt wurde auf unter 90 °C abgekühlt und aus dem Reaktor abgelassen.
Das Produkt hatte It. GPC eine gewichstmittlere Molmasse von 914 g/mol und eine Polydispersität Mw/Mn von 1,07. Die ermittelte OH-Zahl beträgt 69,2.
Induktionsperiode: 41 min

Der Katalysator A4, der unter Verwendung eines Polyethersiloxans hergestellt wurde, zeigt im Vergleich zum Stand der Technik ARCOL Katalysator sowie dem unter Verwendung von Blockpolyether Pluronic 61000 hergestellten Katalysator A3 ein schnelleres Anspringverhalten während der Aktivierungsphase und ist somit der katalytisch aktivere.
Außerdem waren Katalysatoren, bei der Synthese derer Polyethersiloxan nicht während der Fällung des Zinkhexacyanocobaltatcomplexes, sondern im späteren Schritt zugegeben wurde, bei der Ethoxylierung inaktiv.
Dem Fachmann ist bekannt, dass bei Anlagerung von Ethylenoxid die Produkte mit zunehmendem Anteil an EO fest werden bzw. falls die Anlagerung nicht gleichmäßig erfolgt, Separationseffekte im Produkt auftreten. Um zu zeigen, dass Ethoxylate, die mit dem ARCOL Katalysator und dem A4 Katalysator zu unterschiedlichen Produkten führen, wurden die fertigen Produkte auf Raumtemperatur abgekühlt, zentrifugiert und beide Phasen (flüssige obere und die feste untere Phase) mittels ¹H-NMR und GPC untersucht. In der nachfolgenden Tabelle wurden die Untersuchungsergebnisse zusammengefasst.

| Polyether | Anteil an EO (Mol) | ΔAnteil an EO (Mol) | Mₙ (g/mol) | Aussehen der Probe |
|---|---|---|---|---|
| B2 obere Phase | 9,12 | 1,99 | 798 | leicht gelb, opak |
| B2 untere Phase | 11,11 | | 859 | |
| B4 obere Phase | 9,77 | 1,21 | 828 | leicht gelb, opak |
| B4 untere Phase | 10,98 | | 875 | |
| B5 obere Phase | 10,29 | 8,46 | 798 | zweiphasig, weißer Feststoff und klarer Überstand |
| B5 untere Phase | 18,75 | | 1009 | |
| B7 obere Phase | 10,53 | 6,15 | 842 | zweiphasig, weißer Feststoff und klarer Überstand |
| B7 untere Phase | 16,68 | | 1006 | |

Die Untersuchung der beiden durch das Zentrifugieren getrennten Phasen der Produkte zeigte, dass die Anlagerung von Ethylenoxid bei der Arcol Katalyse nicht gleichmäßig erfolgt. Dies führt dazu, dass der zweiphasige Ethoxylat aus EOreichem (festem) Anteil und dem deutlich EO-ärmeren noch flüssigen Restpolyether besteht. Im Falle der Polyether B2 und B4 wurde keine Phasentrennung beobachtet, den minimalen Unterschied in der Menge an EO in beiden Phasen bestätigt die gleichmäßige Anlagering des Monomers an die Kettenenden.

## Patentansprüche

1. Verfahren zur Herstellung von Alkoxylierungsprodukten durch Umsetzung mindestens eines Epoxids (A) in Gegenwart mindestens eines DMC-Katalysators (B), enthaltend
a) ein oder mehrere Doppelmetallcyanid-Verbindungen und
b) ein oder mehrere Polyethersiloxane,
wobei der DMC Katalysator (B) durch Umsetzung von wasserlöslichen Metallsalzen mit wasserlöslichen Metallcyanidsalzen zu Doppelmetallcyanid-Verbindungen der Komponente a) in Anwesenheit mindestens eines Polyethersiloxans der Komponente b) erhalten wird.

2. Verfahren nach Anspruch 1, **dadurch gekennzeichnet, dass** das Polyethersiloxan der Komponente b) ein Gewichtsverhältnis von Siloxan- Anteil zu Polyether-Anteil von 1 zu 1 bis 1 zu 10, bevorzugt 1 zu 1,2 bis 1 zu 8, besonders bevorzugt von 1 zu 1,5 bis 1 zu 5, und insbesondere bevorzugt von 1 zu 1,8 bis 1 zu 3, bezogen auf die berechnete mittlere Molmasse des Polyethersiloxans, aufweist.

3. Verfahren nach einem der Ansprüche 1 oder 2, **dadurch gekennzeichnet, dass** das Polyethersiloxan der Komponente b) des DMC Katalysators (B) ein Polyethersiloxan der Formel (IV)
M_{d} M'_{d1} Dₑ D'ₑ₁ D"ₑ₂ T_{f} Q_{g} (Formel IV)
wobei
M = (R¹₃ Si O_{1/2})
M' = (R²R¹₂ Si O_{1/2})
D = (R¹₂ Si O_{2/2})
D' = (R²R¹ Si O_{2/2})
D" = (R⁴R¹ Si O_{2/2})
T = (R³ Si O_{3/2})
Q = (Si O_{4/2})
d = 0 bis 20;
d1 = 0 bis 20;
e = 0 bis 300;
e1 = 0 bis 25;
e2 = 0 bis 10;
f = 0 bis 10;
g = 0 bis 10;
mit der Maßgabe, dass
die Summe aus d1 und e1 größer 0, bevorzugt größer gleich 1 ist;
R¹ unabhängig voneinander Wasserstoff oder gleiche oder verschiedene lineare oder verzweigte Kohlenwasserstoffreste mit 1 bis 30 Kohlenstoffatomen oder aromatische Kohlenwasserstoffreste mit 6 bis 30 Kohlenstoffatomen;
R² unabhängig voneinander gleiche oder verschiedene Polyether, wobei die Polyether Seitenketten aufweisen können, die gegebenenfalls auch mit weiteren Heteroatomen substituiert sein können,
R³ unabhängig voneinander gleiche oder verschiedene Reste R¹ oder R²,
R⁴ unabhängig voneinander gleiche oder verschiedene organische Reste mit 4 bis 30 Kohlenstoffatomen, mit der Maßgabe, dass R⁴ verschieden von R² ist,
ist.

4. Verfahren nach Anspruch 3 **dadurch gekennzeichnet, dass** R² in Formel (IV) unabhängig voneinander gleiche oder verschiedene Polyether der Formel V oder Formel VI oder Formel VII
-(O)ₙ-CH₂-CH₂-CH₂-O-(CH₂-CH₂O-)ⱼ-(CH₂-CH(R')O-)ₖ-(CH(R')-CH₂O-)_{k'}-R" (Formel V)
und
-(O)ₙ-CH₂-CH₂-O-(CH₂-CH₂O-)ⱼ-(CH₂-CH(R')O-)ₖ-(CH(R')-CH₂O-)_{k'}-R" (Formel VI)
-(O)ₙ-(CH₂-CH₂O-)ⱼ-(CH₂-CH(R')O-)ₖ-(CH(R')-CH₂O-)_{k'}-R" (Formel VII)
mit
h 0 oder 1,
j 0 bis 100,
k + k' =0 bis 100,
mit der Maßgabe, dass die Summe aus j, k und k' mindestens 3 ergibt,
R' unabhängig voneinander eine gegebenenfalls substituierte Alkyl- oder Arylgruppe mit 1 bis 12 C-Atomen und
R" unabhängig voneinander ein Wasserstoffrest oder eine Alkylgruppe mit 1 bis 4 C-Atomen,
bedeutet.

5. Verfahren nach einem der Ansprüche 3 oder 4, **dadurch gekennzeichnet, dass** die Polyethersiloxane der Komponente b) des DMC Katalysators (B) Polyethersiloxane der Formel (IV) mit d = 2, d1 = 0, e = 0 bis 40, e1 = 1 bis 5, e2, f und g = 0, R¹ = Methyl, R2 = (Formel V), (Formel VI) und/ oder (Formel VII) mit h = 0, j = 3 bis 20, k = 0 bis 20, bevorzugt 0, R' = Methyl oder Ethyl und R" = Wasserstoff sind.

6. Verfahren nach einem der Ansprüche 1 bis 5, **dadurch gekennzeichnet, dass** mindestens 30 Mol-% der Epoxide (A), bezogen auf die gesamte molare Menge der Epoxide (A), Ethylenoxid sind.

7. Verfahren nach einem der Ansprüche 1 bis 6, wobei mindestens ein Epoxid (A) und mindestens ein Starter (C) ausgewählt aus der Gruppe der Alkohole umfassend mindestens 3 Kohlenstoffatome, der Polyetherole und/oder der Phenole, besonders bevorzugt ausgewählt aus der Gruppe aus Allylalkohol, Butanol, Octanol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit und/oder Polyetherole mit einer Molmasse von 200 bis 5000 g/mol in Gegenwart mindestens eines DMC-Katalysators (B) umgesetzt werden.

8. Verfahren nach einem der Ansprüche 1 bis 7, **dadurch gekennzeichnet, dass** der DMC Katalysator (B),
a) ein oder mehrere Doppelmetallcyanid-Verbindungen ausgewählt aus Zinkhexacyanocobaltat(III), Zinkhexacyanoiridat (III), Zinkhexacyanoferrat(III) und Cobalt(II)hexacyanocobaltat(III),
b) ein oder mehrere Polyethersiloxane
c) einen oder mehrere von b) verschiedenen organischen Komplexliganden ausgewählt aus aliphatischen Alkoholen,
d) optional einen oder mehrere von b) und c) verschiedene komplexbildende Komponenten ausgewählt aus Polyether, Polyester, Polycarbonat, Glycidylether, Glycosid, Carbonsäureester mehrwertiger Alkohole, Polyalkylenglykolsorbitanester, Gallensäure, Salze der Gallensäure, Ester der Gallensäure, Amid der Gallensäure, Cyclodextrin, organisches Phophat, Phosphit, Phosphonat, Phosphonit, Phosphinat oder Phosphinit, eine ionische oberflächen- bzw. grenzflächenaktive Verbindung oder ein α,ß-ungesättigter Carbonsäureester,
enthält wobei Ethylenoxid und gegebenenfalls weitere Epoxide (A) so wie mindestens ein OH-funktioneller Starter (C) in Gegenwart des DMC-Katalysators (B) umgesetzt werden.

9. Alkoxylierungsprodukt erhältlich nach einem Verfahren gemäß einem der Ansprüche 1 bis 8.

10. Alkoxylierungsprodukt nach Anspruch 9, **dadurch gekennzeichnet, dass** es mindestens 30 bis 100 Mol-% Ethylenoxid, bezogen auf die gesamte molare Menge der Epoxide (A), aufweist.

11. Alkoxylierungsprodukt nach Anspruch 10, **dadurch gekennzeichnet, dass** die Abweichung des Ethylenoxidanteils jedes einzelnen Alkoxylierungsproduktes bevorzugt weniger als 10 Gew-%, insbesondere weniger als 6 Gew-% in Bezug auf den über alle Alkoxylierungsprodukte, die in einer Reaktion hergestellt wurden, gemittelten Gewichtsanteil an Ethylenoxid, beträgt.

12. Alkoxylierungsprodukt nach Anspruch 10 oder 11, **dadurch gekennzeichnet, dass** der Ethylenoxidanteil jedes einzelnen Alkoxylierungsproduktes um weniger als 30 Mol-%, insbesondere weniger als 25 Mol-%, und ganz besonders weniger als 20 Mol-%, von dem mittleren molaren Anteil an Ethylenoxid in Bezug auf den über alle Alkoxylierungsprodukte, die in einer Reaktion hergestellt wurden, gemittelten molaren Anteil an Ethylenoxid, abweicht.

13. Verfahren nach einem der Ansprüche 1 bis 8, **dadurch gekennzeichnet, dass** der Ethylenoxidanteil jedes einzelnen Alkoxylierungsproduktes um weniger als 30 Mol-%, insbesondere weniger als 25 Mol-%, und ganz besonders weniger als 20 Mol-%, von dem mittleren molaren Anteil an Ethylenoxid in Bezug auf den über alle Alkoxylierungsprodukte, die in einer Reaktion hergestellt wurden, gemittelten molaren Anteil an Ethylenoxid, abweicht.

## Claims

1. Process for preparing alkoxylation products by converting at least one epoxide (A) in the presence of at least one DMC catalyst (B) comprising
a) one or more double metal cyanide compounds and
b) one or more polyether siloxanes,
wherein the DMC catalyst (B) is obtained by reacting water-soluble metal salts with water-soluble metal cyanide salts to give double metal cyanide compounds of component a) in the presence of at least one polyether siloxane of component b).

2. Process according to Claim 1, **characterized in that** the polyether siloxane of component b) has a weight ratio of siloxane component to polyether component of 1:1 to 1:10, preferably 1:1.2 to 1:8, more preferably from 1:1.5 to 1:5, and especially preferably from 1:1.8 to 1:3, based on the calculated mean molar mass of the polyether siloxane.

3. Process according to either of Claims 1 and 2, **characterized in that** the polyether siloxane of component b) of the DMC catalyst (B) is a polyether siloxane of the formula (IV)
M_{d} M'_{d1} Dₑ D'ₑ₁ D''ₑ₂ T_{f} Q_{g} (formula IV)
where
M = (R¹₃ Si O_{1/2})
M' = (R²R¹₂ Si O_{1/2})
D = (R¹₂ Si O_{2/2})
D' = (R²R¹ Si O_{2/2})
D" - (R⁴R¹ Si O_{2/2})
T = (R³ Si O_{3/2})
Q = (Si O_{4/2})
d = 0 to 20;
d1 = 0 to 20;
e = 0 to 300;
e1 = 0 to 25;
e2 = 0 to 10;
f = 0 to 10;
g = 0 to 10;
with the proviso that
the sum total of d1 and e1 is greater than 0, preferably greater than or equal to 1;
R¹ is independently hydrogen or identical or different linear or branched hydrocarbyl radicals having 1 to 30 carbon atoms or aromatic hydrocarbyl radicals having 6 to 30 carbon atoms;
R² is independently identical or different polyethers, where the polyethers may have side chains which may optionally also be substituted by further heteroatoms,
R³ is independently identical or different R¹ or R² radicals,
R⁴ is independently identical or different organic radicals having 4 to 30 carbon atoms, with the proviso that R⁴ is different from R².

4. Process according to Claim 3, **characterized in that** R² in formula (IV) is independently identical or different polyethers of the formula V or formula VI or formula VII
-(O)ₕ-CH₂-CH₂-CH₂-O-(CH₂-CH₂O-)ⱼ-(CH₂-CH(R')O-)ₖ-(CH(R')-CH₂O-)_{k'}-R", (formula V)
and
-(O)ₕ-CH₂-CH₂-O-(CH₂-CH₂O-)ⱼ-(CH₂-CH(R')O-)ₖ-(CH(R')-CH₂O-)_{k'}-R" (formula VI)
-(O)ₕ-(CH₂-CH₂O-)ⱼ-(CH₂-CH(R')O-)ₖ- (CH(R')-CH₂O-)ₖ'-R" (formula VII)
where
h is 0 or 1,
j is 0 to 100,
k + k' = 0 to 100,
with the proviso that the sum total of j, k and k' is at least 3,
R' is independently an optionally substituted alkyl or aryl group having 1 to 12 carbon atoms and
R" is independently a hydrogen radical or an alkyl group having 1 to 4 carbon atoms.

5. Process according to either of Claims 3 and 4, **characterized in that** the polyether siloxanes of component b) of the DMC catalyst (B) are polyether siloxanes of the formula (IV) with d = 2, d1 = 0, e = 0 to 40, e1 = 1 to 5, e2, f and g = 0, R1 = methyl, R2 = (formula V), (formula VI) and/or (formula VII) with h = 0, j = 3 to 20, k = 0 to 20, preferably 0, R' = methyl or ethyl and R" = hydrogen.

6. Process according to any of Claims 1 to 5, **characterized in that** at least 30 mol% of the epoxides (A), based on the total molar amount of the epoxides (A), is ethylene oxide.

7. Process according to any of Claims 1 to 6, wherein at least one epoxide (A) and at least one starter (C) selected from the group of the alcohols comprising at least 3 carbon atoms, the polyetherols and/or the phenols, more preferably selected from the group of allyl alcohol, butanol, octanol, dodecanol, stearyl alcohol, 2-ethylhexanol, cyclohexanol, benzyl alcohol, ethylene glycol, propylene glycol, di-, tri- and polyethylene glycol, 1,2-propylene glycol, di- and polypropylene glycol, butane-1,4-diol, hexane-1,6-diol, trimethylolpropane, glycerol, pentaerythritol, sorbitol and/or polyetherols having a molar mass of 200 to 5000 g/mol are converted in the presence of at least one DMC catalyst (B).

8. Process according to any of Claims 1 to 7, **characterized in that** the DMC catalyst (B) comprises
a) one or more double metal cyanide compounds selected from zinc hexacyanocobaltate(III), zinc hexacyanoiridate(III), zinc hexacyanoferrate(III) and cobalt(II) hexacyanocobaltate(III),
b) one or more polyether siloxanes,
c) one or more organic complex ligands other than b), selected from aliphatic alcohols,
d) optionally one or more complex-forming components other than b) and c), selected from polyethers, polyesters, polycarbonate, glycidyl ethers, glycoside, carboxylic esters of polyhydric alcohols, polyalkylene glycol sorbitan esters, gallic acid, salts of gallic acid, esters of gallic acid, amide of gallic acid, cyclodextrins, organic phosphate, phosphite, phosphonate, phosphonite, phosphinate or phosphinite, an ionic surface-or interface-active compound and an α, β-unsaturated carboxylic ester,
wherein ethylene oxide and optionally further epoxides (A), and also at least one OH-functional starter (C), are converted in the presence of the DMC catalyst (B).

9. Alkoxylation product obtainable by a process according to any of Claims 1 to 8.

10. Alkoxylation product according to Claim 9, **characterized in that** it includes at least 30 to 100 mol% of ethylene oxide, based on the total molar amount of the epoxides (A).

11. Alkoxylation product according to Claim 10, **characterized in that** the deviation in the ethylene oxide content of each individual alkoxylation product is preferably less than 10% by weight, especially less than 6% by weight, in relation to the weight average of ethylene oxide over all the alkoxylation products which have been prepared in a reaction.

12. Alkoxylation product according to Claim 10 or 11, **characterized in that** the ethylene oxide content of each individual alkoxylation product deviates by less than 30 mol%, especially less than 25 mol% and most preferably less than 20 mol% from the mean molar proportion of ethylene oxide in relation to the molar proportion of ethylene oxide averaged over all the alkoxylation products which have been prepared in a reaction.

13. Process according to any of Claims 1 to 8, **characterized in that** the ethylene oxide content of each individual alkoxylation product deviates by less than 30 mol%, especially less than 25 mol% and most preferably less than 20 mol% from the mean molar proportion of ethylene oxide in relation to the molar proportion of ethylene oxide averaged over all the alkoxylation products which have been prepared in a reaction.

## Revendications

1. Procédé de fabrication de produits d'alcoxylation par mise en réaction d'au moins un époxyde (A) en présence d'au moins un catalyseur DMC (B), contenant :
a) un ou plusieurs composés de cyanure de deux métaux et
b) un ou plusieurs polyéther-siloxanes,
le catalyseur DMC (B) étant obtenu par mise en réaction de sels métalliques solubles dans l'eau avec des sels de cyanure métalliques solubles dans l'eau pour former les composés de cyanure de deux métaux du composant a) en présence d'au moins un polyéther-siloxane du composant b).

2. Procédé selon la revendication 1, **caractérisé en ce que** le polyéther-siloxane du composant b) présente un rapport en poids entre la proportion de siloxane et la proportion de polyéther de 1 sur 1 à 1 sur 10, de préférence de 1 sur 1,2 à 1 sur 8, de manière particulièrement préférée de 1 sur 1,5 à 1 sur 5, et de manière notamment préférée de 1 sur 1, 8 à 1 sur 3, par rapport à la masse molaire moyenne calculée du polyéther-siloxane.

3. Procédé selon l'une quelconque des revendications 1 ou 2, **caractérisé en ce que** le polyéther-siloxane du composant b) du catalyseur DMC (B) est un polyéther-siloxane de formule (IV)
M_{d}M'_{d1}DeD'ₑ₁D"ₑ₂T_{f}Q_{g} (Formule IV)
dans laquelle
M = (R¹₃SiO_{1/2})
M' = (R²R¹₂SiO_{1/2})
D = (R¹₂SiO_{2/2})
D' = (R²R¹SiO_{2/2})
D" = (R⁴R¹SiO_{2/2})
T = (R³SiO_{3/2})
Q = (SiO_{4/2})
d = 0 à 20 ;
d1 = 0 à 20 ;
e = 0 à 300 ;
e1 = 0 à 25 ;
e2 = 0 à 10 ;
f = 0 à 10 ;
g = 0 à 10 ;
à condition que
la somme de d1 et e1 soit supérieure à 0, de préférence supérieure ou égale à 1 ;
les R¹ sont indépendamment les uns des autres l'hydrogène ou des radicaux hydrocarbonés linéaires ou ramifiés identiques ou différents de 1 à 30 atomes de carbone ou des radicaux hydrocarbonés aromatiques de 6 à 30 atomes de carbone ;
les R² sont indépendamment les uns des autres des polyéthers identiques ou différents, les polyéthers pouvant comprendre des chaînes latérales, qui peuvent éventuellement également être substituées avec des hétéroatomes supplémentaires,
les R³ sont indépendamment les uns des autres des radicaux R¹ ou R² identiques ou différents,
les R⁴ sont indépendamment les uns des autres des radicaux organiques identiques ou différents de 4 à 30 atomes de carbone, à condition que R⁴ soit différent de R².

4. Procédé selon la revendication 3, **caractérisé en ce que** les R² dans la formule (IV) sont indépendamment les uns des autres des polyéthers identiques ou différents de formule V ou de formule VI ou de formule VII
-(O)ₕ-CH₂-CH₂-CH₂-O-(CH₂-CH₂-O-)ⱼ-(CH₂-CH(R')O-)ₖ-(CH(R')-CH₂O-)_{k'}-R" (Formule V)
et
-(O)ₕ-CH₂-CH₂-O-(CH₂-CH₂-O-)ⱼ-(CH₂-CH(R')O-)ₖ-(CH(R')-CH₂O-)_{k'}-R" (Formule VI)
-(O)ₕ-(CH₂-CH₂-O-)ⱼ-(CH₂-CH(R')O-)ₖ-(CH(R')-CH₂O-)_{k'}-R" (Formule VII)
avec
h = 0 ou 1,
j = 0 à 100,
k + k' = 0 à 100,
à condition que la somme de j, k et k' soit d'au moins 3, les R' signifient indépendamment les uns des autres un groupe alkyle ou aryle éventuellement substitué de 1 à 12 atomes C, et
les R" signifient indépendamment les uns des autres un radical hydrogène ou un groupe alkyle de 1 à 4 atomes C.

5. Procédé selon l'une quelconque des revendications 3 ou 4, **caractérisé en ce que** les polyéther-siloxanes du composant b) du catalyseur DMC (B) sont des polyéther-siloxanes de formule (IV) avec d = 2, d1 = 0, e = 0 à 40, e1 = 1 à 5, e2, f et g = 0, R1 = méthyle, R2 = (Formule V), (Formule VI) et/ou (Formule VII) avec h = 0, j = 3 à 20, k = 0 à 20, de préférence 0, R' = méthyle ou éthyle et R" = hydrogène.

6. Procédé selon l'une quelconque des revendications 1 à 5, **caractérisé en ce qu'**au moins 30 % en moles des époxydes (A), par rapport à la quantité molaire totale des époxydes (A), sont de l'oxyde d'éthylène.

7. Procédé selon l'une quelconque des revendications 1 à 6, dans lequel au moins un époxyde (A) et au moins un démarreur (C) choisi dans le groupe des alcools comprenant au moins 3 atomes de carbone, des polyétherols et/ou des phénols, de manière particulièrement préférée dans le groupe constitué par l'alcool allylique, le butanol, l'octanol, le dodécanol, l'alcool stéarylique, le 2-éthylhexanol, le cyclohexanol, l'alcool benzylique, l'éthylène glycol, le propylène glycol, le di-, tri- et polyéthylène glycol, le 1,2-propylène glycol, le di- et polypropylène glycol, le 1,4-butanediol, le 1,6-hexanediol, le triméthylolpropane, la glycérine, la pentaérythrite, le sorbitol et/ou les polyétherols ayant une masse molaire de 200 à 5 000 g/mol, sont mis en réaction en présence d'au moins un catalyseur DMC (B).

8. Procédé selon l'une quelconque des revendications 1 à 7, **caractérisé en ce que** le catalyseur DMC (B) continent :
a) un ou plusieurs composés de cyanure de deux métaux choisis parmi l'hexacyanocobaltate de zinc (III), l'hexacyanoiridate de zinc (III), l'hexacyanoferrate de zinc (III) et l'hexacyanocobaltate (III) de cobalt (II),
b) un ou plusieurs polyéther-siloxanes,
c) un ou plusieurs ligands complexes organiques différents de b) choisis parmi les alcools aliphatiques,
d) éventuellement un ou plusieurs composants complexants différents de b) et c) choisis parmi un polyéther, un polyester, un polycarbonate, un éther glycidylique, un glycoside, un ester d'acide carboxylique d'alcools polyvalents, un ester de sorbitane de polyalkylène glycol, l'acide biliaire, un sel de l'acide biliaire, un ester de l'acide biliaire, un amide de l'acide biliaire, la cyclodextrine, un phosphate, phosphite, phosphonate, phosphonite, phosphinate ou phosphinite organique, un composé tensioactif ionique ou un ester d'acide carboxylique α,β-insaturé,
de l'oxyde d'éthylène et éventuellement d'autres époxydes (A), ainsi qu'au moins un démarreur à fonction OH (C) étant mis en réaction en présence du catalyseur DMC (B).

9. Produit d'alcoxylation pouvant être obtenu par un procédé selon l'une quelconque des revendications 1 à 8.

10. Produit d'alcoxylation selon la revendication 9, **caractérisé en ce qu'**il comprend au moins 30 à 100 % en moles d'oxyde d'éthylène, par rapport à la quantité molaire totale des époxydes (A).

11. Produit d'alcoxylation selon la revendication 10, **caractérisé en ce que** la différence de la proportion d'oxyde d'éthylène de chaque produit d'alcoxylation individuel est de préférence inférieure à 10 % en poids, notamment inférieure à 6 % en poids, par rapport à la proportion en poids d'oxyde d'éthylène moyennée sur tous les produits d'alcoxylation qui ont été fabriqués dans une réaction.

12. Produit d'alcoxylation selon la revendication 10 ou 11, **caractérisé en ce que** la proportion d'oxyde d'éthylène de chaque produit d'alcoxylation individuel diffère de moins de 30 % en moles, notamment de moins de 25 % en moles et tout particulièrement de moins de 20 % en moles, de la proportion molaire moyenne d'oxyde d'éthylène par rapport à la proportion molaire d'oxyde d'éthylène moyennée sur tous les produits d'alcoxylation qui ont été fabriqués dans une réaction.

13. Procédé selon l'une quelconque des revendications 1 à 8, **caractérisé en ce que** la proportion d'oxyde d'éthylène de chaque produit d'alcoxylation individuel diffère de moins de 30 % en moles, notamment de moins de 25 % en moles et tout particulièrement de moins de 20 % en moles, de la proportion molaire moyenne d'oxyde d'éthylène par rapport à la proportion molaire d'oxyde d'éthylène moyennée sur tous les produits d'alcoxylation qui ont été fabriqués dans une réaction.
